Europäisches Patentamt

European Patent Office

Office européen des brevets

(11) Veröffentlichungsnummer: **0 304 575 B1**

(12) **EUROPÄISCHE PATENTSCHRIFT**

(45) Veröffentlichungstag der Patentschrift: **23.12.92**

(51) Int. Cl.⁵: **G06K 1/12**

(21) Anmeldenummer: **88109760.4**

(22) Anmeldetag: **18.06.88**

(54) **Kennzeichnung von industriellen Erzeugnissen oder Einzelteilen davon.**

(30) Priorität: **27.08.87 DE 3728622**

(43) Veröffentlichungstag der Anmeldung:
**01.03.89 Patentblatt 89/09**

(45) Bekanntmachung des Hinweises auf die
Patenterteilung:
**23.12.92 Patentblatt 92/52**

(84) Benannte Vertragsstaaten:
**ES FR GB IT SE**

(56) Entgegenhaltungen:
**DD-A- 153 260**
**DE-B- 1 499 422**

(73) Patentinhaber: **DAIMLER-BENZ AKTIENGE-
SELLSCHAFT**
**Mercedesstrasse 136**
**W-7000 Stuttgart 60(DE)**

(72) Erfinder: **Gensel, Herbert**
**Fr.-Ebert-Strasse 13/233**
**W-70332 Singelfingen(DE)**
Erfinder: **Michels, Winfried**
**Auf der Stelle 11**
**W-70322 Singelfingen(DE)**
Erfinder: **Jooss, Gerhard**
**Wiöhelmstrasse 30**
**W-7140 Ludwigsburg(DE)**
Erfinder: **Mertes, Peter**
**Römerhofweg 6**
**W-7407 Rottenburg(DE)**

**Beschreibung**

Die Erfindung betrifft ein Kennzeichen in Form von alphanumerischen Zeichen und/oder Firmenzeichen an industriellen Erzeugnissen oder Einzelteilen davon nach dem Oberbegriff von Anspruch 1 und ein Verfahren zum Anbringen solcher Kennzeichen nach dem Oberbegriff von Anspruch 4. In diesem Zusammenhang sei als Stand der Technik zum einen die hinlänglich verbreitete und bekannte Technik erwähnt, insbesondere harte Stahlteile wie z.B. Zerspanungswerkzeuge auf funkenerosivem Wege zu beschriften. Die US-A 1 474 706 empfielt, Fahrzeuge gegen Entwendung durch das Einlochen einer auf den rechtmäßigen Eigentümer hinweisenden Ident-Nummer zu schützen, wobei die Lochungen vorzugsweise durch Bohren angebracht werden sollen. Die DE-B 14 99 422 zeigt eine Anordnung zum Aufzeichnen von Informationen in kodierter Form auf einen Materialstreifen mittels Laserstrahl.

Das im Gattungsteil der oben genannten Ansprüche erwähnte Anbringen der Zeichen mittels eines energiereichen Strahles kann außer durch einen Laserstrahl auch - wie gesagt - auf funkenerosivem Wege oder aber durch einen Hochdruckwasserstrahl erfolgen; letzterer hinterläßt zumindest dann eine Spur auf der Werkstückoberfläche, wenn es sich um weichere Werkstoffe handelt. Ein Einbrennen insbesondere mit Laserstrahl oder mittels Funkenerosion kommt insbesondere für harte Oberflächen in Betracht. Mit Laserstrahl läßt sich jedoch jede Werkstoffart kennzeichnen.

Bei der Kennzeichnung industrieller erzeugnisse ist es häufig wünschenswert, außer einer alphanumerischen Kennzeichnung auch noch eine informationsgleiche, ohne weiteres maschinenlesbare Zusatzcodierung anzubringen (vgl. beispielsweise die DE-PS 26 16 436). Nachteilig an der doppelten Kennzeichnung ist der relativ große Platzbedarf für die beiden unterschiedlichen Kennzeichnungsarten und - bei in den Werkstoff enge arbeiteter Kennzeichnung - der relativ hohe Fertigungsaufwand für die beiden nebeneinander angebrachten Kennzeichnungen.

Aufgabe der Erfindung ist es, eine doppelartige, informationsgleiche Kennzeichnung industrieller Erzeugnisse anzugeben, die platzsparend und rationell herstellbar ist.

Diese Aufgabe wird erfindungsgemäß durch die kennzeichnenden Merkmale von Anspruch 1 für das alphanumerische Kennzeichen und durch die kennzeichnenden Merkmale von Anspruch 4 für das Verfahren gelöst. Die Zusatzcodierung wird aufgrund einer zeichenintegrierten Anbringung platzsparend untergebracht und ist außerdem im selben Arbeitsgang wie die Kennzeichnung der ersten Art aufgrund einer größeren Einbrenntiefe herstellbar. Dank der Verwendung hochauflösender Sensoren ist die höhere Einbrenntiefe und die Verteilung der tieferen Einbrennstellen ohne weiteres detektierbar und somit jedes einzelne Zeichen auch an der Zusatzcodierung maschinell lesbar.

Zweckmäßige Ausgestaltungen können den Unteransprüchen entnommen werden. Im übrigen ist die Erfindung anhand verschiedener in den Zeichnungen dargestellter Ausführungsbeispiele nachfolgend noch erläutert; dabei zeigen:

Figur 1 die Ansicht auf eine Kennzeichnung eines ausschnittsweise dargestellten Werkstükkes mit jeweils informationsgleicher maschinenlesbarer Zusatzcodierung,

Figur 2 die isolierte Darstellung der Zusatzcodierung gemäß dem Ausführungsbeispiel nach Figur 1,

Figur 3 einen Querschnitt durch die Kennzeichnung entlang der Schnittlinie III-III in Figur 1 und

Figur 4 eine Abwandlung der Erfindung bzw. der Schnittdarstellung nach Figur 3 für größere Wandstärken.

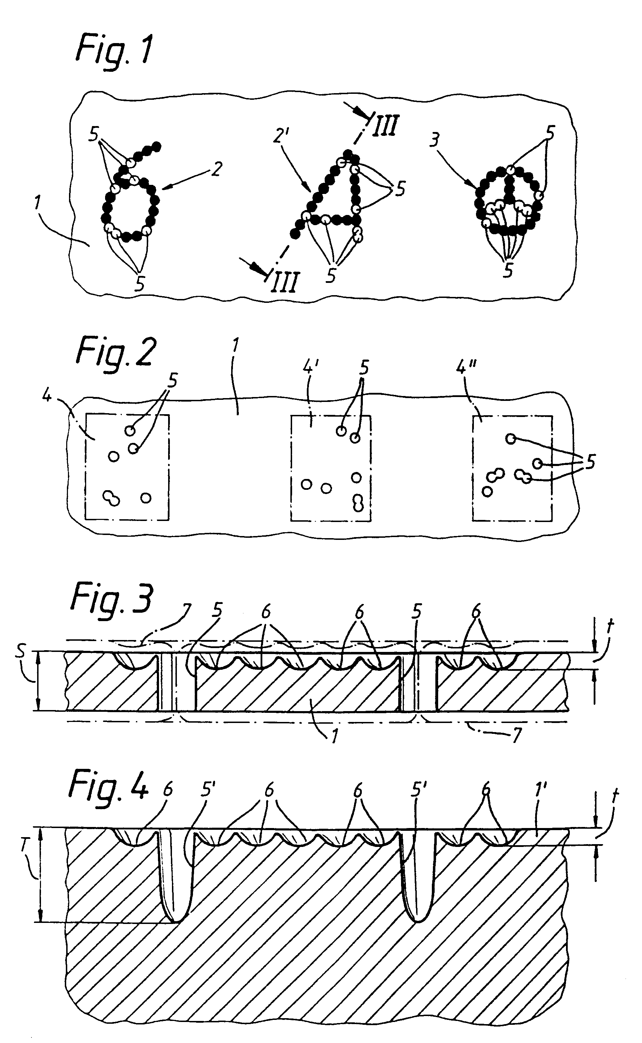

In den Figuren 1 bis 3 ist das lediglich mit einem kleinen Oberflächenausschnitt dargestellte, zu kennzeichnende Werkstück mit 1 bezeichnet: das entsprechende, stärkerwandige Werkstück nach Figur 4 trägt das Bezugszeichen 1'. Die Kennzeichnung besteht beim dargestellten Ausführungsbeispiel aus den beiden alphanumerischen Zeichen 2 und 2', nämlich der Ziffer 6 und dem Großbuchstaben A sowie einem Firmenzeichen 3. Die alphanumerischen Zeichen 2, 2' und das Firmenzeichen 3 sind durch Einbrennen des entsprechenden die Zeichen ausmachenden Linienzuges in die Werkstückoberfläche mittels eines Laserstrahles hergestellt. Und zwar sind im Bereich der normalen Brennspur in dichter Folge mehrere einzelne punktuelle Vertiefungen 6 in Form jeweils eines Brennkraters 6 eingebrannt, wie dies die Querschnittsdarstellungen nach den Figuren 3 und 4 zeigen. Um die Zeichen auch nach einer Überlakkierung (Lackierschicht 7) oder auch nach Einwirkung eines gewissen Verschleißes sicher erkennen zu können, ist die normale Brennspur wenigstens etwa 0,3 mm tief eingebrannt (Maß t).

Um platzsparend und rationell eine zeichenintegrierte, maschinenlesbare Zusatzcodierung mit den visuell lesbaren Zeichen 2, 2' und 3 anbringen zu können, sind entlang des Linienzuges eines jeden Zeichens deutlich tiefere Eintiefungen 5 (bzw. 5' beim Ausführungsbeispiel nach Figur. 3) vorgesehen. Die Verteilung der tieferen Eintiefungen 5 bzw. 5' ist nicht willkürlich, sondern so zeichenindividuell entlang des Linienzuges verteilt, daß bei der maschinellen Detektion des Lochbildes der Eintiefungen 5 bzw. 5' eine eindeutige Zuordnung zwischen dem Lochbild der Zusatzcodierung 4, 4', 4" zum einen und den visuell lesbaren Zeichen 2, 2' und 3 zum anderen möglich ist. Jedes alphanumerische Zeichen hat ein individuelles und von den anderen Zeichen deutlich unterscheidbares Lochbild, welches eindeutig maschinell detektierbar ist. In Figur 2 sind die Lochbilder der tieferen Eintiefungen 5 als Zusatzcodierung 4 bzw. 4' bzw. 4" alleine dargestellt.

In Fällen, in denen das Werkstück 1 im Bereich der Kennzeichnung lediglich eine solche Wandstärke S aufweist, die durch den Laserstrahl durchtrennt werden kann, sind die tieferen Eintiefungen 5 als durchgehende Löcher ausgebildet. Bei Kennzeichnung von dickerwandigen Werkstükken 1 sind die tieferen Eintiefungen 5' als Sacklöcher ausgebildet; die Einbrenntiefe T dieser Sacklöcher ist um ein mehrfaches größer als die Einbrenntiefe t im Bereich der normalen Brennspur, so daß die tieferen Eintiefungen 5' auch bei einer Ausbildung als Sackloch eindeutig durch einen geeigneten Sensor detektierbar sind.

Der Vorteil der Erfindung liegt darin, daß sowohl die Basiskennzeichnung (Zeichen 2, 2', 3) als auch die Zusatzcodierung 4, 4', 4" in einem einheitlichen Arbeitsgang platzsparend angebracht werden kann. Bei der Anbringung einer tieferen Eintiefung 5 bzw. 5' verweilt der Energiestrahl an der betreffenden Stelle lediglich etwas länger als beim Einbrennen einer normalen Vertiefung 6 innerhalb der normalen Brenn Spur. Dieses etwas längere Verweilen des Energiestrahles an bestimmten Positionen der Brennspur ist jedoch nur so gering, daß dieses bei der Beobachtung des Beschriftungsvorganges einem visuellen Betrachter überhaupt nicht auffällt. Der "Zeitverlust" für die Zusatzcodierung bei einem Einzelzeichen liegt im Bereich von Millisekunden. Im übrigen wird überhaupt kein zusätzlicher Platz für die Zusatzcodierung benötigt. Ein weiterer Vorteil ist darin zu sehen, daß die Beschriftung mit Zusatzcodierung auch nachträglich an lackierten Gegenständen angebracht werden kann, wobei allerdings die Codierung an den tiefen Eintiefungen durchgebrannt wird.

**Patentansprüche**

1. Kennzeichen an industriellen Erzeugnissen (1, 1') oder Einzelteilen davon in Form von alphanumerischen Zeichen (2, 2') und/oder Firmenzeichen (3), die jeweils aus einer dem Linienzug eines jeden Zeichens (2, 2', 3) folgenden Kette von punktuellen Vertiefungen (6) in der Werkstückoberfläche bestehen, die durch einen energiereichen Strahl, insbesondere einen Laserstrahl hervorgerufen sind, **dadurch gekennzeichnet,** daß jedes Zeichen (2, 2', 3) eine zeichenintegrierte, zeichenindividuelle, maschinenlesbare Zusatzkodierung (4, 4', 4") in Form von mehreren zusätzlichen Vertiefungen (5, 5') enthält, die

- entlang des Linienzuges eines jeden Zeichens (2, 2', 3) verteilt sowie an bestimmten, zeichenindividuell ausgesuchten Stellen angeordnet sind,
- deutlich tiefer (Maß T, Maß S) als die sonstigen, das Zeichen (2, 2', 3) ausmachenden Vertiefungen (6, Maß t) eingetieft und aufgrund dessen für sich maschinell detektierbar sind und
- höchstens unwesentlich breiter als die sonstige, das Zeichen (2, 2', 3) ausmachende Kette von Vertiefungen (6) ausgebildet sind.

2. Kennzeichen nach Anspruch 1, **dadurch gekennzeichnet,** daß die Zeichen (2, 2', 3) im Bereich annähernd konstanter Wandstärke (S) des Werkstückes (1) angbracht sind und daß die tieferen Eintiefungen als durchgehende Löcher (5) ausgebildet sind.

3. Kennzeichen nach Anspruch 1, **dadurch gekennzeichnet,** daß die normalen, das Zeichen (2, 2', 3) ausmachenden Vertiefungen (6) wenigstens etwa 0,3 mm (Maß t) eingetieft sind.

4. Verfahren zum Kennzeichnen von industriellen Erzeugnissen (1) oder Einzelteilen davon durch Anbringen von alphanumerischen Zeichen (2, 2') und/oder Firmenzeichen (3) mittels eines energiereichen Strahles, insbesondere einen Laserstrahles, wobei jeweils entlang des Linienzuges eines jeden Zeichens (2, 2', 3) eine Kette von punktuellen Vertiefungen (6) durch den energiereichen Strahl in der Werkstückoberfläche hervorgerufen wird, **dadurch gekennzeichnet,** daß beim Anbringen der Zeichen (2, 2', 3) zugleich eine zeichenintegrierte, zeichenindividuelle, maschinenlesbare Zusatzkodierung (4, 4', 4") angebracht wird, indem bei jedem Zeichen (2, 2', 3) innerhalb der Kette von punktuellen Vertiefungen (6) einzelne Vertiefungen (5, 5') deutlich tiefer als die sonstigen, das Zeichen (2, 2', 3) ausmachenden Vertiefungen (6) eingetieft werden, wobei die zusätlichen Vertiefungen (5, 5')

- entlang des Linienzuges eines jeden Zeichens (2, 2', 3) verteilt sowie an bestimmten, zeichenindividuell ausgesuchten Stellen angebracht werden,
- um so viel tiefer als die sonstigen Vertiefungen (6, Maß t) eingetieft werden (Maß T, Maß S), daß die zusätzlichen Vertiefungen (5, 5') für sich maschinell detektierbar sind und

- an der Werkstückoberfläche höchstens unwesentlich breiter als die sonstige, das Zeichen (2, 2', 3) ausmachende Kette von Vertiefungen (6) ausgebildet werden.

## Claims

1. Distinguishing markings on industrial products (1, 1') or individual parts thereof in the form of alphanumerical signs (2, 2') and/or firm's trade mark (3), which in each instance consist in a chain of point depressions (6) following the line of each sign (2, 2', 3) in the workpiece surface, which are produced by an energy-rich beam, particularly a laser beam, characterized in that each sign (2, 2', 3) contains a sign integrated, sign individual, machine-readable additional coding (4, 4', 4") in the form of several additional depressions (5, 5') which

   - are distributed along the line of each individual sign (2, 2', 3) as well as arranged at specific places individually selected for the sign;
   - are definitely recessed more deeply (measurement T, measurement S) than the other recesses (6, measurement t) forming the sign (2, 2', 3), and on the basis of this are per se detectable by machine, and
   - are designed to be at the most marginally wider than the other chain of depressions (6) forming the sign (2, 2', 3).

2. Distinguishing markings according to claim 1, characterized in that the signs (2, 2', 3) are applied in the region of approximately constant wall thickness (S) of the workpiece (1) and in that the deeper depressions are formed as through holes (5).

3. Distinguishing markings according to claim 1, characterized in that the normal depressions (6) forming the sign (2, 2', 3) are recessed at least to a depth of some 0.3 mm (measurement t).

4. Process for the distinguishing marking of industrial products (1) or individual parts thereof by the application of alphanumerical signs (2, 2') and/or firm's trade mark (3) by means of an energy-rich beam, particularly a laser beam, whereby, in each instance along the line of each sign (2, 2', 3) a chain of point depressions (6) is produced by the energy-rich beam in the workpiece surface, characterized in that, when applying the signs (2, 2', 3) there is applied at the same time a sign-integrated, sign individual, machine-readable additional coding (4, 4', 4"), in that, for each sign (2, 2', 3) within the chain of point depressions (6) individual depressions (5, 5') are definitely deeper than the other depressions (6) constituting the sign (2, 2', 3), in which process the additional depressions (5, 5')

   - are applied along the line of each individual sign (2, 2', 3) as well as provided at specific places individually selected for the sign;
   - are depressed more deeply than the other depressions (6, measurement t) to such an extent (measurement T, measurement S) to such an extent that the additional depressions (5, 5') that they are detectable per se by machine, and
   - are formed on the workpiece surface at the most marginally wider than the other chain of depressions (6) forming the sign (2, 2', 3).

## Revendications

1. Caractérisation de produits industriels (1, 1') ou de leurs pièces détachées sous la forme de symboles alphanumériques (2, 2') et/ou de symboles de Sociétés (3), qui se composent respectivement d'une chaîne, suivant le tracé linéaire de chaque symbole (2, 2', 3), de creux ponctuels (6) dans la surface de pièce, qui sont créés par un rayon riche en énergie, notamment un rayon laser,

   - caractérisée en ce que chaque symbole (2, 2', 3) contient un codage additionnel (4, 4', 4"), intégré dans le symbole, individuel pour chaque symbole, lisible par machine et se présentant sous la forme de plusieurs creux additionnels (5, 5'),
     - qui sont répartis le long du tracé linéaire de chaque symbole (2, 2', 3) et qui sont disposés en des positions déterminées, recherchées individuellement pour chaque symbole,
     - qui sont nettement plus profonds (cote T, cote S) que les autres creux (6, cote t) définissant le symbole (2, 2', 3) et qui peuvent de ce fait être détectés par machine, et
     - qui sont réalisés au maximum un peu plus larges que les autres creux (6) de la chaîne définissant le symbole (2, 2', 3).

2. Caractérisation selon la revendication 1, caractérisée en ce que les symboles (2, 2', 3) sont disposés dans une zone d'épaisseur de paroi (5) approximativement constante de la pièce (1) et en ce que les creux plus profonds sont réalisés sous forme de trous traversants (5).

3. Caractérisation selon la revendication 1, caractérisée en ce que les creux normaux (6) définissant le symbole (2, 2', 3) sont réalisés avec une profondeur d'au moins environ 0,3 mm (cote t).

4. Procédé pour caractériser des produits industriels (1) ou leurs pièces détachées par formation de symboles alphanumériques (2, 2') et/ou de symboles de Sociétés (3) au moyen d'un rayon riche en énergie, notamment un rayon laser, où respectivement le long du tracé linéaire de chaque symbole (2, 2', 3) une chaîne de creux ponctuels (6) est créée par le rayon riche en énergie dans la surface de la pièce,

    - caractérisé en ce que, lors de la formation des symboles (2, 2', 3), simultanément un codage additionnel (4, 4', 4"), intégré dans le symbole, individuel pour chaque symbole et lisible par machine, est formé en créant pour chaque symbole (2, 2', 3) à l'intérieur de la chaîne de creux ponctuels (6) des creux individuels (5, 5') nettement plus profonds que les autres creux (6) formant le symbole (2, 2', 3), ces creux additionnels (5, 5') :
    - étant répartis le long du tracé linéaire de chaque symbole (2, 2', 3) et étant disposés en des positions déterminées et recherchées individuellement pour chaque symbole,
    - étant réalisés avec des profondeurs (cote T, cote S) d'autant plus grandes que les autres creux (6, cote t) que les creux additionnels (5, 5') sont détectables individuellement par machine et
    - étant formés dans la surface de pièce en étant au maximum un peu plus larges que les autres creux (6) de la chaîne formant le symbole (2, 2', 3).

*Fig. 1*

*Fig. 2*

*Fig. 3*

*Fig. 4*